# FASCICULE DE BREVET EUROPEEN

(11) **EP 4 056 349 B1**
(45) Date de publication et mention de la délivrance du brevet: **08.05.2024**
(21) Numéro de dépôt: 22160447.3
(22) Date de dépôt: 07.03.2022
(51) Int. Cl.: B29C 48/255, B29C 48/305, B29C 48/08, B29C 48/25, B29C 48/30

(54) **FILIÈRE D' EXTRUSION POUR L'EXTRUSION D'UN FILM EN MATIÈRE SYNTHÉTIQUE**
EXTRUSIONSDÜSE ZUM EXTRUDIEREN EINER SYNTHETISCHEN FOLIE
EXTRUSION DIE FOR EXTRUDING A FILM OF SYNTHETIC MATERIAL

(30) Priorité: 08.03.2021 FR 2102191
(43) Date de publication de la demande: 14.09.2022
(73) Titulaire: MARCHANTE, 73800 Montmelian (FR)
(72) Inventeur: Marchante, Carolina, 73160 Saint-Cassin (FR)
(74) Mandataire: Germain Maureau

(56) Documents cités:
- CH-A- 394 595
- CN-B- 105 398 021
- DE-A1- 1 504 266
- DE-A1- 19 541 762
- DE-B- 1 179 702
- DE-U1-202014 001 644
- US-A- 4 185 951

## Description

La présente invention concerne une filière d'extrusion pour l'extrusion d'un film en matière synthétique.

Le document DE 1179702 B1 décrit une filière d'extrusion, pour l'extrusion d'un film en matière synthétique, comportant
- un orifice d'alimentation configuré pour alimenter la filière d'extrusion en matière synthétique fondue,
- un collecteur relié à l'orifice d'alimentation et s'étendant selon une direction d'extension correspondant à la largeur du film en matière synthétique à extruder, le collecteur étant configuré pour répartir la matière synthétique fondue provenant de l'orifice d'alimentation selon la direction d'extension, et
- une fente de sortie qui s'étend sensiblement parallèlement à la direction d'extension et qui est reliée au collecteur de telle sorte que la matière synthétique fondue introduite dans le collecteur soit refoulée à travers la fente de sortie,
- et une première vis sans fin ayant un premier axe longitudinal central et une deuxième vis sans fin ayant un deuxième axe longitudinal central, les première et deuxième vis sans fin s'étendant transversalement à la direction d'extrusion et délimitant au moins un passage d'écoulement configuré pour permettre un écoulement de la matière synthétique fondue du collecteur vers la fente de sortie.

Lorsque la matière synthétique fondue s'écoule à travers une filière d'extrusion du type précité, les molécules de la matière synthétique fondue ont tendance à s'orienter selon la direction d'extrusion du film en matière synthétique. Ainsi, un film en matière synthétique extrudé à partir de la filière d'extrusion précitée présente une résistance mécanique dans une direction transversale qui est limitée.

Lors de la fabrication d'un film en matière synthétique, le film, après son extrusion, passe successivement par une étape d'étirage longitudinal et une étape d'étirage transversal. En fonction des applications finales du film en matière synthétique, le taux d'étirage transversal subit par ce dernier peut être élevé. Or, étant donné qu'un film extrudé à partir d'une filière d'extrusion du type précité présente une résistance mécanique dans une direction transversale qui est limitée, les risques de déchirure du film lors de l'étape d'étirage transversal sont importants, ce qui peut induire une mise au rebus d'une quantité importante de film.

La présente invention vise à remédier à ces inconvénients.

Le problème technique à la base de l'invention consiste donc à fournir une filière d'extrusion qui soit de structure simple et économique, tout en évitant ou limitant sensiblement les risques de déchirure ultérieure du film extrudé lors d'une étape d'étirage transversal ultérieure subie par ce dernier.

A cet effet, la présente invention concerne une filière d'extrusion selon la revendication 1 pour l'extrusion d'un film en matière synthétique, tel qu'un film destiné à la fabrication de film séparateur de batterie, selon une direction d'extrusion, la filière d'extrusion comportant :
- un orifice d'alimentation configuré pour alimenter la filière d'extrusion en matière synthétique fondue,
- un collecteur relié à l'orifice d'alimentation et s'étendant selon une direction d'extension correspondant à la largeur du film en matière synthétique à extruder,
- une fente de sortie qui s'étend sensiblement parallèlement à la direction d'extension et qui est reliée au collecteur de telle sorte que la matière synthétique fondue introduite dans le collecteur soit refoulée à travers la fente de sortie,
- une première vis sans fin ayant un premier axe longitudinal central et une deuxième vis sans fin ayant un deuxième axe longitudinal central, les première et deuxième vis sans fin s'étendant transversalement à la direction d'extrusion et délimitant au moins un passage d'écoulement configuré pour permettre un écoulement de la matière synthétique fondue du collecteur vers la fente de sortie,
   caractérisée en ce que la filière d'extrusion comporte en outre
- un dispositif d'entraînement en rotation configuré pour entraîner en rotation la première vis sans fin autour du premier axe longitudinal central et selon un premier sens de rotation et pour entraîner en rotation la deuxième vis sans fin autour du deuxième axe longitudinal central et selon un deuxième sens de rotation qui est opposé au premier sens de rotation, la première vis sans fin étant configurée pour déplacer au moins une première partie de la matière synthétique fondue s'écoulant à travers l'au moins un passage d'écoulement selon une direction de déplacement qui est sensiblement parallèle à la direction d'extension et dans un premier sens de déplacement, et la deuxième vis sans fin étant configurée pour déplacer au moins une deuxième partie de la matière synthétique fondue s'écoulant à travers l'au moins un passage d'écoulement selon la direction de déplacement et dans un deuxième sens de déplacement qui est opposé au premier sens de déplacement.

En d'autres termes, les première et deuxième vis sans fin sont configurées de telle sorte qu'au moins une première partie de la matière synthétique fondue s'écoulant à travers l'au moins un passage d'écoulement a une composante d'écoulement s'étendant selon une direction d'écoulement qui est sensiblement parallèle à la direction d'extension et dans un premier sens de déplacement et de telle sorte qu'au moins une deuxième partie de la matière synthétique fondue s'écoulant à travers l'au moins un passage d'écoulement a une composante d'écoulement s'étendant selon une direction d'écoulement et dans un deuxième sens de déplacement opposé au premier sens de déplacement.

Une telle configuration de la filière d'extrusion selon la présente invention permet d'orienter au moins une partie des molécules de la matière synthétique fondue, et donc du film en matière synthétique extrudé, selon la largeur du film en matière synthétique. De ce fait, un film en matière synthétique obtenu à l'aide d'une filière d'extrusion selon la présente invention présente une résistance mécanique améliorée dans une direction transversale. Ces dispositions permettent en particulier d'éviter des déchirures du film lors d'un étirage transversal ultérieur de ce dernier, et réduit sensiblement la quantité de film mise au rebus.

Dans la présente description, le terme « sensiblement parallèle » signifie parallèle ou présentant un angle compris entre 0 et 10°, et avantageusement entre 0 et 5°.

La filière d'extrusion selon la présente invention est une filière d'extrusion plate, et peut par exemple être une filière d'extrusion en T, une filière d'extrusion en queue de carpe ou une filière d'extrusion en porte-manteau.

La filière d'extrusion peut en outre présenter une ou plusieurs des caractéristiques suivantes, prises seules ou en combinaison.

Selon un mode de réalisation de l'invention, le collecteur est configuré pour répartir la matière synthétique fondue provenant de l'orifice d'alimentation selon la direction d'extension.

Selon un mode de réalisation de l'invention, le premier axe longitudinal central et le deuxième axe longitudinal central sont disposés de part et d'autre d'un plan longitudinal médian de la filière d'extrusion.

Selon un mode de réalisation de l'invention, les première et deuxième vis sans fin sont disposées sensiblement de manière symétrique par rapport au plan longitudinal médian de la filière d'extrusion.

Selon un mode de réalisation de l'invention, les première et deuxième vis sans fin s'étendent sensiblement parallèlement l'une par rapport à l'autre.

Selon un mode de réalisation de l'invention, les première et deuxième vis sans fin s'étendent sensiblement perpendiculairement à la direction d'extrusion.

Selon un mode de réalisation de l'invention, les première et deuxième vis sans fin s'étendent sensiblement parallèlement à la direction d'extension.

Selon un mode de réalisation de l'invention, les première et deuxième vis sans fin sont espacées l'une de l'autre d'une distance prédéterminée comprise entre 0,05 et 0,5 mm, et par exemple d'environ 0,2 mm.

Selon un mode de réalisation de l'invention, la filière d'extrusion comporte en outre une zone de relaxation qui située en aval du collecteur et en amont de la fente de sortie, les premier et deuxième axes longitudinaux centraux étant disposés de part et d'autre de la zone de relaxation et chacune des première et deuxième vis sans fin faisant saillie dans la zone de relaxation.

Selon un mode de réalisation de l'invention, la zone de relaxation s'étend sensiblement parallèlement à la direction d'extension et présente une épaisseur sensiblement constante le long de sa longueur.

Selon un mode de réalisation de l'invention, la zone de relaxation présente une épaisseur inférieure à celle de la fente de sortie.

Selon un mode de réalisation de l'invention, la filière d'extrusion comporte une zone intermédiaire qui est située entre la zone de relaxation et le collecteur. De façon avantageuse, la zone de relaxation présente une épaisseur supérieure à celle de la zone intermédiaire.

Selon un mode de réalisation de l'invention, le dispositif d'entraînement en rotation comporte :
- un premier moteur d'entraînement configuré pour entraîner en rotation la première vis sans fin selon le premier sens de rotation, et
- un deuxième moteur d'entraînement configuré pour entraîner en rotation la deuxième vis sans fin selon le deuxième sens de rotation.

Selon un mode de réalisation de l'invention, les première et deuxième vis sans fin présentent des pas de vis sensiblement identiques.

Selon un mode de réalisation de l'invention, la filière d'extrusion comporte une unité de commande configurée pour modifier les vitesses de rotation des première et deuxième vis sans fin.

Selon un mode de réalisation de l'invention, les première et deuxième vis sans fin présentent des diamètres extérieurs sensiblement identiques.

Selon un mode de réalisation de l'invention, la fente de sortie est orientée vers le bas.

Selon un mode de réalisation de l'invention, les premier et deuxième axes longitudinaux centraux s'étendent dans un plan d'extension, la fente de sortie et le plan d'extension étant séparés d'une distance de séparation qui est inférieure à deux fois le diamètre extérieur de l'une quelconque des première et deuxième vis sans fin. Une telle configuration de la filière d'extrusion permet d'éviter que les molécules, qui ont été orientées selon la largeur du film en matière synthétique lors de leur passage au niveau des première et deuxième vis sans fin, ne soient réorientées selon la direction d'extrusion, c'est-à-dire sensiblement selon la longueur du film en matière synthétique, avant qu'elles s'écoulent à travers la fente de sortie.

Selon un mode de réalisation de l'invention, la fente de sortie présente une largeur comprise entre 0,5 et 1,5 mm, et par exemple d'environ 0,8 mm.

Selon un mode de réalisation de l'invention, l'orifice d'alimentation présente un diamètre compris entre 20 et 30 mm, et par exemple d'environ 25 mm.

Selon un mode de réalisation de l'invention, l'orifice d'alimentation débouche dans une partie centrale du collecteur.

Selon un mode de réalisation de l'invention, la matière synthétique fondue est une composition comportant un ou plusieurs polymère(s), tel que du polyéthylène et/ou du polypropylène, et de l'huile, telle qu'une huile de paraffine.

Selon un mode de réalisation de l'invention, la première vis sans fin présente un premier filetage s'étendant sur sensiblement la totalité de la longueur de la première vis sans fin. De façon avantageuse, le premier filetage présente un pas de vis qui est sensiblement constant sur sensiblement la totalité de la longueur de la première vis sans fin.

Selon un mode de réalisation de l'invention, la deuxième vis sans fin présente un deuxième filetage s'étendant sur sensiblement la totalité de la longueur de la deuxième vis sans fin. De façon avantageuse, le deuxième filetage présente un pas de vis qui est sensiblement constant sur sensiblement la totalité de la longueur de la deuxième vis sans fin.

Selon un mode de réalisation de l'invention, le plan d'extension s'étend sensiblement horizontalement.

Selon un mode de réalisation de l'invention, le plan d'extension est sensiblement perpendiculaire au plan longitudinal médian de la filière d'extrusion.

La présente invention concerne en outre une tête d'extrusion comportant une filière d'extrusion selon l'invention.

La présente invention sera bien comprise à l'aide de la description qui suit en référence aux figures annexées, dans lesquelles des signes de références identiques correspondent à des éléments structurellement et/ou fonctionnellement identiques ou similaires.
Figure 1 est une vue en perspective de dessus d'une tête d'extrusion selon la présente invention.
Figure 2 est une vue en perspective de dessous de la tête d'extrusion de la figure 1.
Figure 3 est une vue partielle en perspective de la tête d'extrusion de la figure 1.
Figure 4 est une vue partielle en perspective de la tête d'extrusion de la figure 1.
Figure 5 est une vue en coupe longitudinale de la tête d'extrusion de la figure 1.
Figure 6 est une vue de dessus de deux vis sans fin d'une filière d'extrusion de la tête d'extrusion de la figure 1.
Figure 7 est une vue partielle de dessus, à l'échelle agrandie, des deux vis sans fin de la figure 6.
Figure 8 est une vue en coupe transversale de la tête d'extrusion de la figure 1.

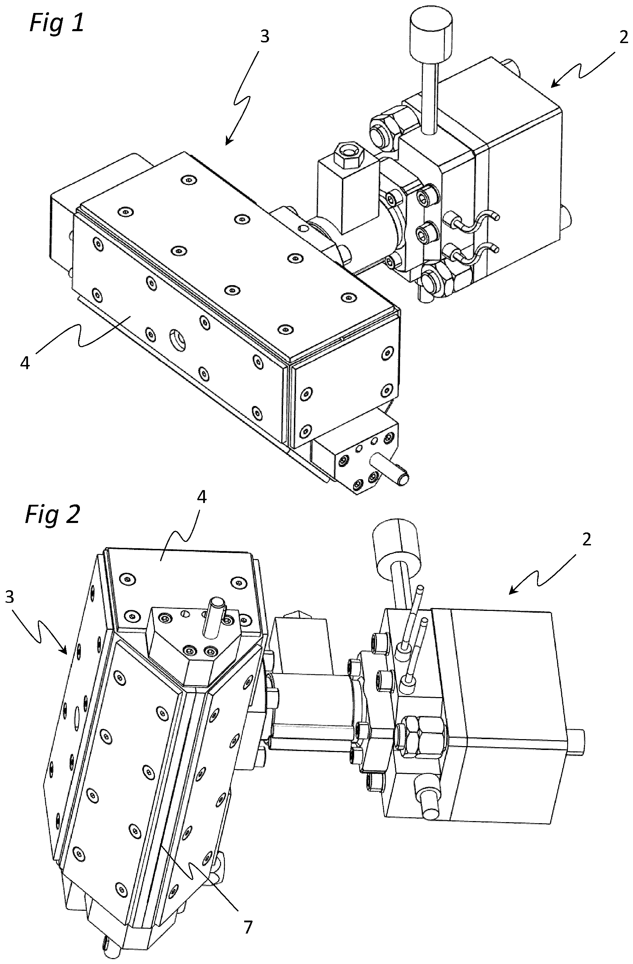

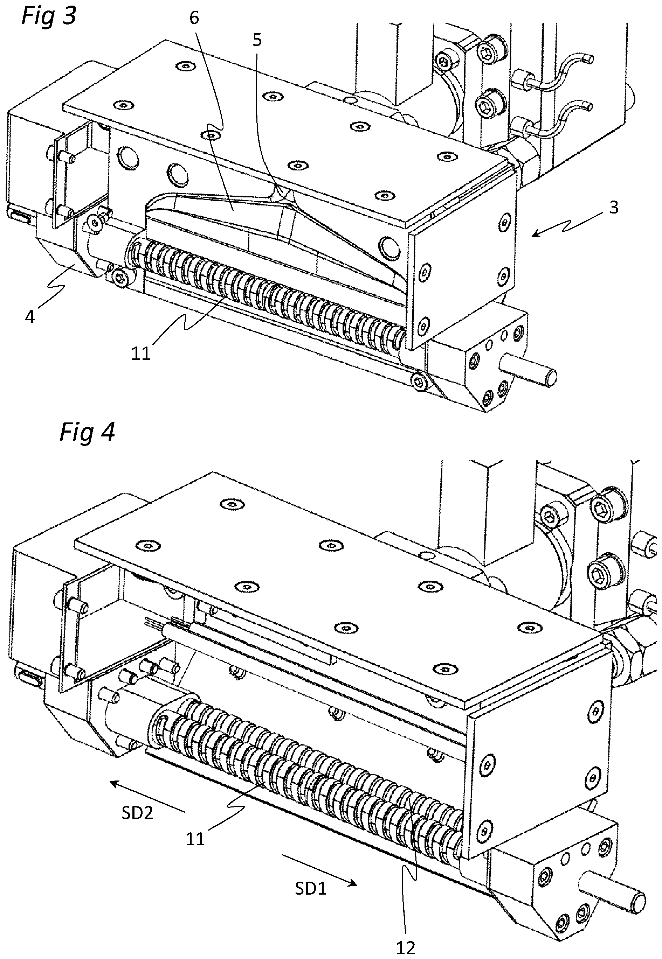

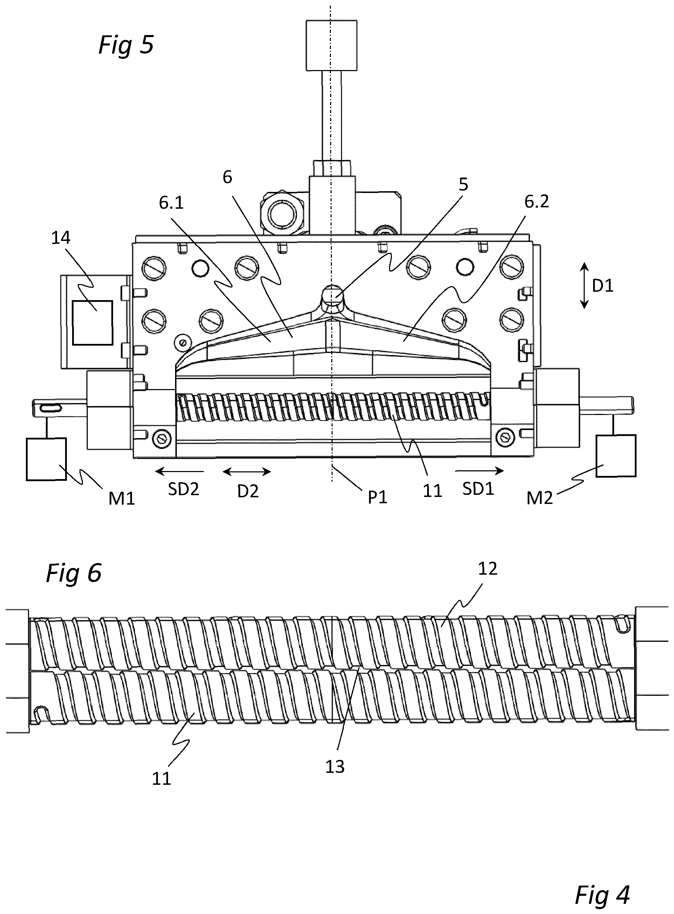

Les figures 1 à 8 représente une tête d'extrusion 2 pour l'extrusion d'un film en matière synthétique selon une direction d'extrusion D1 correspondant à la longueur du film en matière synthétique à extruder. La tête d'extrusion 2 peut par exemple être configurée pour extruder un film en polypropylène, en polyester ou composé de toute autre matière thermoplastique, et également un film en matière synthétique destiné à la fabrication de film séparateur de batterie.

La tête d'extrusion 2 comporte une filière d'extrusion 3 qui est une filière d'extrusion plate, et qui peut par exemple être une filière d'extrusion en T, une filière d'extrusion en queue de carpe ou une filière d'extrusion en porte-manteau.

La filière d'extrusion 3 comporte un corps principal 4 qui est allongé et qui est pourvu notamment d'un orifice d'alimentation 5 configuré pour alimenter la filière d'extrusion 3 en matière synthétique fondue. De façon avantageuse, l'orifice d'alimentation 5 présente un diamètre compris entre 20 et 30 mm, et par exemple d'environ 25 mm. Selon un mode de réalisation de l'invention, la matière synthétique fondue est une composition comportant un ou plusieurs polymère(s), tel que du polyéthylène et/ou du polypropylène, et de l'huile, telle qu'une huile de paraffine. Toutefois, selon une variante de réalisation, la composition pourrait comporter uniquement un ou plusieurs polymère(s).

Le corps principal 4 comporte en outre un collecteur 6 relié à l'orifice d'alimentation 5 et s'étendant selon une direction d'extension D2 correspondant à la largeur du film en matière synthétique à extruder. De façon avantageuse, l'orifice d'alimentation 5 débouche dans une partie centrale du collecteur 6.

Le collecteur 6 comporte une première partie de collecteur 6.1 et une deuxième partie de collecteur 6.2 qui s'étendent de part et d'autre d'un plan transversal médian P1 du corps principal 4. Le collecteur 6 est plus particulièrement configuré pour répartir la matière synthétique fondue provenant de l'orifice d'alimentation 5 selon la direction d'extension D2.

Le corps principal 4 comporte également une fente de sortie 7 qui s'étend sensiblement parallèlement à la direction d'extension D2 et qui est reliée au collecteur 6 de telle sorte que la matière synthétique fondue introduite dans le collecteur 6 soit refoulée hors de la filière d'extrusion 3 à travers la fente de sortie 7. La fente de sortie 7 est orientée vers le bas et peut par exemple présenter une largeur comprise entre 0,5 et 1,5 mm, et avantageusement d'environ 0,8 mm.

Le corps principal 4 comporte de plus une zone de relaxation 8 qui située en aval du collecteur 6 et en amont de la fente de sortie 7, par rapport au sens d'écoulement de la matière synthétique fondue à travers la filière d'extrusion 3. La zone de relaxation 8 s'étend sensiblement parallèlement à la direction d'extension D2 et présente avantageusement une épaisseur qui est sensiblement constante le long de sa longueur et qui est inférieure à celle de la fente de sortie 7.

De façon avantageuse, le corps principal 4 comporte également une zone intermédiaire 9 qui relie le collecteur 6 à la zone de relaxation 8 et qui présente une épaisseur inférieure à celle de la zone de relaxation 8.

La filière d'extrusion 3 comporte en outre une première vis sans fin 11 ayant un premier axe longitudinal central A11 et une deuxième vis sans fin 12 ayant un deuxième axe longitudinal central A12. Les première et deuxième vis sans fin 11, 12 sont montées sur le corps principal 4 de telle sorte que le premier axe longitudinal central A11 et le deuxième axe longitudinal central A12 soient disposés de part et d'autre d'un plan longitudinal médian P2 du corps principal 4 et s'étendent dans un plan d'extension P3 qui est sensiblement horizontal lorsque la filière d'extrusion 3 est en conditions de fonctionnement. De façon avantageuse, la fente de sortie 7 et le plan d'extension P3 sont séparés d'une distance de séparation Ds qui est inférieure à deux fois le diamètre extérieur de l'une quelconque des première et deuxième vis sans fin 11, 12.

Les première et deuxième vis sans fin 11, 12 s'étendent parallèlement l'une par rapport à l'autre et parallèlement à la direction d'extension D2. Les première et deuxième vis sans fin 11, 12 sont disposées sensiblement de manière symétrique par rapport au plan longitudinal médian P2 du corps principal 4. Les première et deuxième vis sans fin 11, 12 sont espacées l'une de l'autre d'une distance prédéterminée comprise entre 0,05 et 0,5 mm, et par exemple d'environ 0,2 mm, de manière à délimiter un passage d'écoulement 13 configuré pour permettre un écoulement de la matière synthétique fondue du collecteur 6 vers la fente de sortie 7.

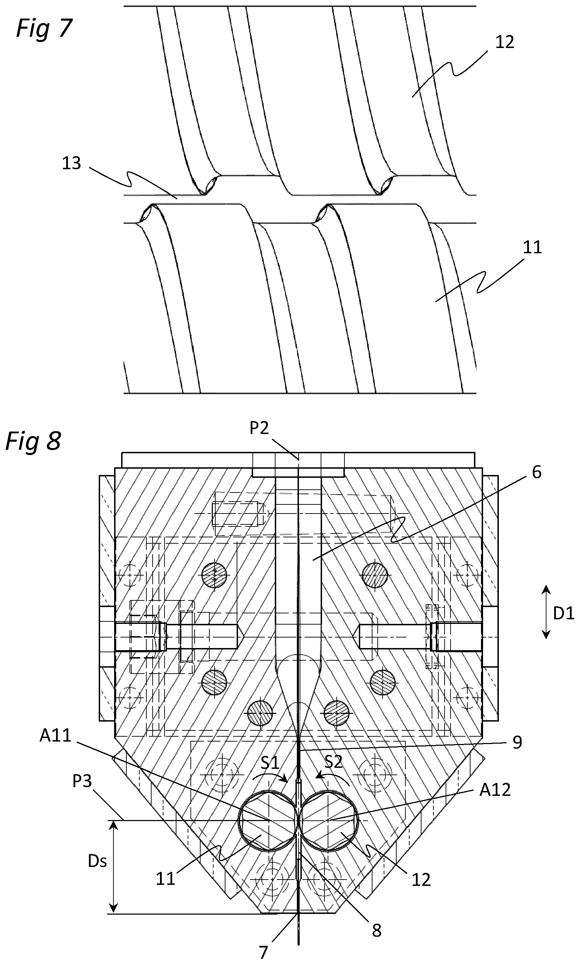

Comme montré plus particulièrement sur la figure 8, les premier et deuxième axes longitudinaux centraux A11, A12 sont disposés de part et d'autre de la zone de relaxation 8, et chacune des première et deuxième vis sans fin 11, 12 fait saillie dans la zone de relaxation 8.

De façon avantageuse, les première et deuxième vis sans fin 11, 12 présentent des pas de vis sensiblement identiques, et ont des diamètres extérieurs sensiblement identiques.

La filière d'extrusion 3 comporte également un dispositif d'entraînement en rotation configuré pour entraîner en rotation la première vis sans fin 11 autour du premier axe longitudinal central A11 et selon un premier sens de rotation S1 et pour entraîner en rotation la deuxième vis sans fin 12 autour du deuxième axe longitudinal central A12 et selon un deuxième sens de rotation S2 qui est opposé au premier sens de rotation S1.

Selon le mode de réalisation représenté sur les figures, le dispositif d'entraînement en rotation comporte :
- un premier moteur d'entraînement M1 configuré pour entraîner en rotation la première vis sans fin 11 selon le premier sens de rotation S1, et
- un deuxième moteur d'entraînement M2 configuré pour entraîner en rotation la deuxième vis sans fin selon le deuxième sens de rotation S2.

Ainsi, la première vis sans fin 11 est configurée pour déplacer au moins une première partie de la matière synthétique fondue s'écoulant à travers le passage d'écoulement 13 selon une direction de déplacement sensiblement parallèle à la direction d'extension D2 et dans un premier sens de déplacement SD1, et la deuxième vis sans fin 12 est configurée pour déplacer au moins une deuxième partie de la matière synthétique fondue s'écoulant à travers le passage d'écoulement 13 selon la direction de déplacement et dans un deuxième sens de déplacement SD2 qui est opposé au premier sens de déplacement SD1. En d'autres termes, les première et deuxième vis sans fin 11, 12 sont configurées de telle sorte qu'au moins une première partie de la matière synthétique fondue s'écoulant à travers le passage d'écoulement 13 a une composante d'écoulement s'étendant selon une direction de déplacement sensiblement parallèle à la direction d'extension D2 et dans le premier sens de déplacement SD1 et de telle sorte qu'au moins une deuxième partie de la matière synthétique fondue s'écoulant à travers le passage d'écoulement 13 a une composante d'écoulement s'étendant selon la direction de déplacement et dans le deuxième sens de déplacement SD2.

De façon avantageuse, la filière d'extrusion 3 comporte en outre une unité de commande 14 configurée pour modifier les vitesses de rotation des premier et deuxième moteurs d'entraînement M1, M2 et donc des première et deuxième vis sans fin 11, 12, par exemple afin d'adapter la quantité de matière synthétique fondue ayant une composante d'écoulement selon la direction de déplacement, et donc selon la largeur du film en matière synthétique extrudé.

## Revendications

1. Filière d'extrusion (3) pour l'extrusion d'un film en matière synthétique selon une direction d'extrusion (D1), la filière d'extrusion (3) comportant :
- un orifice d'alimentation (5) configuré pour alimenter la filière d'extrusion (3) en matière synthétique fondue,
- un collecteur (6) relié à l'orifice d'alimentation (5) et s'étendant selon une direction d'extension (D2) correspondant à la largeur du film en matière synthétique à extruder,
- une fente de sortie (7) qui s'étend sensiblement parallèlement à la direction d'extension (D2) et qui est reliée au collecteur (6) de telle sorte que la matière synthétique fondue introduite dans le collecteur (6) soit refoulée à travers la fente de sortie (7),
- une première vis sans fin (11) ayant un premier axe longitudinal central (A11) et une deuxième vis sans fin (12) ayant un deuxième axe longitudinal central (A12), les première et deuxième vis sans fin (11, 12) s'étendant transversalement à la direction d'extrusion (D1) et délimitant au moins un passage d'écoulement (13) configuré pour permettre un écoulement de la matière synthétique fondue du collecteur (6) vers la fente de sortie (7),
**caractérisée en ce que** la filière d'extrusion comporte en outre
- un dispositif d'entraînement en rotation configuré pour entraîner en rotation la première vis sans fin (11) autour du premier axe longitudinal central (A11) et selon un premier sens de rotation (S1) et pour entraîner en rotation la deuxième vis sans fin (12) autour du deuxième axe longitudinal central (A12) et selon un deuxième sens de rotation (S2) qui est opposé au premier sens de rotation (S1), la première vis sans fin (11) étant configurée pour déplacer au moins une première partie de la matière synthétique fondue s'écoulant à travers l'au moins un passage d'écoulement (13) selon une direction de déplacement qui est sensiblement parallèle à la direction d'extension (D2) et dans un premier sens de déplacement (SD1), et la deuxième vis sans fin (12) étant configurée pour déplacer au moins une deuxième partie de la matière synthétique fondue s'écoulant à travers l'au moins un passage d'écoulement (13) selon la direction de déplacement et dans un deuxième sens de déplacement (SD2) qui est opposé au premier sens de déplacement (SD1).

2. Filière d'extrusion (3) selon la revendication 1, dans laquelle le premier axe longitudinal central (A11) et le deuxième axe longitudinal central (A12) sont disposés de part et d'autre d'un plan longitudinal médian (P2) de la filière d'extrusion (3).

3. Filière d'extrusion (3) selon la revendication 1 ou 2, dans laquelle les première et deuxième vis sans fin (11, 12) s'étendent sensiblement parallèlement l'une par rapport à l'autre.

4. Filière d'extrusion (3) l'une quelconque des revendications 1 à 3, dans laquelle les première et deuxième vis sans fin (11, 12) s'étendent sensiblement parallèlement à la direction d'extension (D2).

5. Filière d'extrusion (3) selon l'une quelconque des revendications 1 à 4, dans laquelle les première et deuxième vis sans fin (11, 12) sont espacées l'une de l'autre d'une distance prédéterminée comprise entre 0,05 et 0,5 mm, et par exemple d'environ 0,2 mm.

6. Filière d'extrusion (3) selon l'une quelconque des revendications 1 à 5, laquelle comporte en outre une zone de relaxation (8) qui située en aval du collecteur (6) et en amont de la fente de sortie (7), les premier et deuxième axes longitudinaux centraux (A11, A12) étant disposés de part et d'autre de la zone de relaxation (8) et chacune des première et deuxième vis sans fin (11, 12) faisant saillie dans la zone de relaxation (8).

7. Filière d'extrusion (3) selon l'une quelconque des revendications 1 à 6, dans laquelle le dispositif d'entraînement en rotation comporte :
- un premier moteur d'entraînement (M1) configuré pour entraîner en rotation la première vis sans fin (11) selon le premier sens de rotation (S1), et
- un deuxième moteur d'entraînement (M2) configuré pour entraîner en rotation la deuxième vis sans fin (12) selon le deuxième sens de rotation (S2).

8. Filière d'extrusion (3) selon l'une quelconque des revendications 1 à 7, dans laquelle les première et deuxième vis sans fin (11, 12) présentent des pas de vis sensiblement identiques.

9. Filière d'extrusion (3) selon l'une quelconque des revendications 1 à 8, laquelle comporte une unité de commande (14) configurée pour modifier les vitesses de rotation des première et deuxième vis sans fin (11, 12).

10. Filière d'extrusion (3) selon l'une quelconque des revendications 1 à 9, dans laquelle les premier et deuxième axes longitudinaux centraux (A11, A12) s'étendent dans un plan d'extension (P3), la fente de sortie (7) et le plan d'extension (P3) étant séparés d'une distance de séparation (Ds) qui est inférieure à deux fois le diamètre extérieur de l'une quelconque des première et deuxième vis sans fin (11, 12).

11. Tête d'extrusion (2) comportant une filière d'extrusion (3) selon l'une quelconque des revendications précédentes.

## Patentansprüche

1. Extrusionsdüse (3) zum Extrudieren einer Kunststofffolie in einer Extrusionsrichtung (D1), wobei die Extrusionsdüse (3) Folgendes umfasst:
- eine Zufuhröffnung (5), die dazu konfiguriert ist, der Extrusionsdüse (3) geschmolzenes Kunststoffmaterial zuzuführen,
- eine Sammeleinrichtung (6), die mit der Zuführöffnung (5) verbunden ist und sich in einer Erstreckungsrichtung (D2) erstreckt, die der Breite der zu extrudierenden Kunststofffolie entspricht,
- einen Austrittsschlitz (7), der sich im Wesentlichen parallel zur Erstreckungsrichtung (D2) erstreckt und der mit der Sammeleinrichtung (6) derart verbunden ist, dass das in die Sammeleinrichtung (6) eingeführte geschmolzene Kunststoffmaterial durch den Austrittsschlitz (7) gedrückt wird,
- eine erste Schnecke (11) mit einer ersten zentralen Längsachse (A11) und eine zweite Schnecke (12) mit einer zweiten zentralen Längsachse (A12), wobei sich die erste und die zweite Schnecke (11, 12) quer zur Extrusionsrichtung (D1) erstrecken und mindestens einen Strömungskanal (13) begrenzen, der dazu konfiguriert ist, das Strömen des geschmolzenen Kunststoffmaterials von der Sammeleinrichtung (6) zum Austrittsschlitz (7) zu ermöglichen,
**dadurch gekennzeichnet, dass** die Extrusionsdüse ferner Folgendes umfasst:
- eine Drehantriebsvorrichtung, die dazu konfiguriert ist, die erste Schnecke (11) um die erste zentrale Längsachse (A11) und in einer ersten Drehrichtung (S1) drehanzutreiben und die zweite Schnecke (12) um die zweite zentrale Längsachse (A12) und in einer zweiten Drehrichtung (S2), die der ersten Drehrichtung (S1) entgegengesetzt ist, drehanzutreiben, wobei die erste Schnecke (11) dazu konfiguriert ist, mindestens einen ersten Teil des geschmolzenen Kunststoffmaterials, das durch den mindestens einen Strömungskanal (13) strömt, in einer Bewegungsrichtung, die im Wesentlichen parallel zu einer ersten Erstreckungsrichtung (D2) ist, und in einer ersten Bewegungslaufrichtung (SD1) zu bewegen, und die zweite Schnecke (12) dazu konfiguriert ist, mindestens einen zweiten Teil des geschmolzenen Kunststoffmaterials, das durch den mindestens einen Strömungskanal (13) strömt, in der Bewegungsrichtung und in einer zweiten Bewegungslaufrichtung (SD2), die der ersten Bewegungslaufrichtung (SD1) entgegengesetzt ist, zu bewegen.

2. Extrusionsdüse (3) nach Anspruch 1, wobei die erste zentrale Längsachse (A11) und die zweite zentrale Längsachse (A12) auf beiden Seiten einer Längsmittelebene (P2) der Extrusionsdüse (3) angeordnet sind.

3. Extrusionsdüse (3) nach Anspruch 1 oder 2, wobei sich die erste und die zweite Schnecke (11, 12) im Wesentlichen parallel zueinander erstrecken.

4. Extrusionsdüse (3) nach einem der Ansprüche 1 bis 3, wobei sich die erste und die zweite Schnecke (11, 12) im Wesentlichen parallel zur Erstreckungsrichtung (D2) erstrecken.

5. Extrusionsdüse (3) nach einem der Ansprüche 1 bis 4, wobei die erste und die zweite Schnecke (11, 12) um einen vorbestimmten Abstand, der zwischen 0,05 und 0,5 mm liegt, und zum Beispiel etwa 0,2 mm beträgt, voneinander beabstandet sind.

6. Extrusionsdüse (3) nach einem der Ansprüche 1 bis 5, die ferner einen Entspannungsbereich (8) umfasst, der sich stromabwärts der Sammeleinrichtung (6) und stromaufwärts des Austrittsschlitzes (7) befindet, wobei die erste und die zweite zentrale Längsachse (A11, A12) auf beiden Seiten des Entspannungsbereichs (8) angeordnet sind und die erste und die zweite Schnecke (11, 12) jeweils in den Entspannungsbereich (8) hineinragen.

7. Extrusionsdüse (3) nach einem der Ansprüche 1 bis 6, wobei die Drehantriebsvorrichtung Folgendes umfasst:
- einen ersten Antriebsmotor (M1), der dazu konfiguriert ist, die erste Schnecke (11) in der ersten Drehrichtung (S1) drehanzutreiben, und
- einen zweiten Antriebsmotor (M2), der dazu konfiguriert ist, die zweite Schnecke (12) in der zweiten Drehrichtung (S2) drehanzutreiben.

8. Extrusionsdüse (3) nach einem der Ansprüche 1 bis 7, wobei die erste und die zweite Schnecke (11, 12) im Wesentlichen die gleiche Steigung aufweisen.

9. Extrusionsdüse (3) nach einem der Ansprüche 1 bis 8, die eine Steuereinheit (14) umfasst, die dazu konfiguriert ist, die Drehzahl der ersten und der zweiten Schnecke (11, 12) zu verändern.

10. Extrusionsdüse (3) nach einem der Ansprüche 1 bis 9, wobei sich die erste und die zweite zentrale Längsachse (A11, A12) in einer Erstreckungsebene (P3) erstrecken, der Austrittsschlitz (7) und die Erstreckungsebene (P3) durch einen Trennungsabstand (Ds) voneinander getrennt sind, der zweimal kleiner ist als der Außendurchmesser einer der ersten und der zweiten Schnecke (11, 12).

11. Extrusionskopf (2), der eine Extrusionsdüse (3) nach einem der vorhergehenden Ansprüche umfasst.

## Claims

1. An extrusion die (3) for extruding a synthetic material film according to a direction of extrusion (D1), the extrusion die (3) including:
- a feed-in orifice (5) configured to feed the extrusion die (3) with a molten synthetic material,
- a collector (6) connected to the feed-in orifice (5) and extending according to a direction of extension (D2) corresponding to the width of the synthetic material film to be extruded,
- an outlet slot (7) which extends substantially parallel to the direction of extension (D2) and which is connected to the collector (6) such that the molten synthetic material introduced into the collector (6) is expelled through the outlet slot (7),
- a first worm screw (11) having a first central longitudinal axis (A11) and a second worm screw (12) having a second central longitudinal axis (A12), the first and second worm screws (11, 12) extending transversely to the direction of extrusion (D1) and delimiting at least one flow passage (13) configured to enable a flow of the molten synthetic material from the collector (6) towards the outlet slot (7),
**characterized in that** the extrusion die (3) further includes:
- a rotational drive device configured to drive the first worm screw (11) in rotation about the first central longitudinal axis (A11) and according to a first sense of rotation (S1) and to drive the second worm screw (12) in rotation about the second central longitudinal axis (A12) and according to a second sense of rotation (S2) which is opposite to the first sense of rotation (S1), the first worm screw (11) being configured to displace at least a first portion of the molten synthetic material flowing through the at least one flow passage (13) according to a direction of displacement which is substantially parallel to the direction of extension (D2) and in a first sense of displacement (SD1), and the second worm screw (12) being configured to displace at least a second portion of the molten synthetic material flowing through the at least one flow passage (13) according to the direction of displacement and in a second sense of displacement (SD2) which is opposite to the first sense of displacement (SD1).

2. The extrusion die (3) according to claim 1, wherein the first central longitudinal axis (A11) and the second central longitudinal axis (A12) are disposed on either side of a median longitudinal plane (P2) of the extrusion die (3).

3. The extrusion die (3) according to claim 1 or 2, wherein the first and second worm screws (11, 12) extend substantially parallel to each other.

4. The extrusion die (3) according to any one of claims 1 to 3, wherein the first and second worm screws (11, 12) extend substantially parallel to the direction of extension (D2).

5. The extrusion die (3) according to any one of claims 1 to 4, wherein the first and second worm screws (11, 12) are spaced apart from each other by a predetermined distance comprised between 0.05 and 0.5 mm, and for example by about 0.2 mm.

6. The extrusion die (3) according to any one of claims 1 to 5, which further includes a relief area (8) which is located downstream of the collector (6) and upstream of the outlet slot (7), the first and second central longitudinal axes (A11, A12) being disposed on either side of the relief area (8) and each of the first and second worm screws (11, 12) projecting in the relief area (8).

7. The extrusion die (3) according to any one of claims 1 to 6, wherein the rotational drive device includes:
- a first drive motor (M1) configured to drive the first worm screw (11) in rotation according to the first sense of rotation (S1), and
- a second drive motor (M2) configured to drive the second worm screw (12) in rotation according to the second sense of rotation (S2).

8. The extrusion die (3) according to any one of claims 1 to 7, wherein the first and second worm screws (11, 12) having substantially identical screw pitches.

9. The extrusion die (3) according to any one of claims 1 to 8, which includes a control unit (14) configured to modify the rotational speeds of the first and second worm screws (11, 12).

10. The extrusion die (3) according to any one of claims 1 to 9, wherein the first and second central longitudinal axes (A11, A12) extend in a plane of extension (P3), the outlet slot (7) and the plane of extension (P3) being separated by a separating distance (Ds) which is smaller than twice the external diameter of any one of the first and second worm screws (11, 12).

11. The extrusion head (2) including an extrusion die (3) according to any one of the preceding claims.
